Europäisches Patentamt

European Patent Office

Office européen des brevets

(19)

(11) Numéro de publication: **0 218 504**
**B1**

(12) **FASCICULE DE BREVET EUROPEEN**

(45) Date de publication du fascicule du brevet: **11.07.90**

(51) Int. Cl.⁵: **G 06 K 13/08,** G 06 K 7/06

(21) Numéro de dépôt: **86401982.3**

(22) Date de dépôt: **10.09.86**

(54) **Procédé de confiscation d'une carte pour un lecteur mixte et lecteur mixte.**

(30) Priorité: **12.09.85 FR 8513559**

(43) Date de publication de la demande:
**15.04.87 Bulletin 87/16**

(45) Mention de la délivrance du brevet:
**11.07.90 Bulletin 90/28**

(84) Etats contractants désignés:
**AT BE CH DE FR GB IT LI LU NL SE**

(56) Documents cités:
**EP-A-0 134 110**
**FR-A-2 445 560**
**FR-A-2 477 303**
**US-A-3 850 299**

(73) Titulaire: **BULL S.A.**
**121 avenue de Malakoff P.B. 193.16**
**F-75764 Paris Cédex 16 (FR)**

(72) Inventeur: **Chevalier, Michel**
**29 rue de la Madeleine**
**F-78 Chevreuse (FR)**
Inventeur: **Briane, Alain**
**31 rue Condorcet**
**F-75009 Paris (FR)**
Inventeur: **Bouaziz, Joel**
**La Ferme du Temple**
**F-91130 Ris Orangis (FR)**

(74) Mandataire: **Debay, Yves et al**
**94, Avenue Gambetta PC 0W009D**
**F-75990 Paris Cedex 20 (FR)**

Courier Press, Leamington Spa, England.

## Description

La présente invention concerne un procédé de confiscation d'une carte pour un lecteur mixte et lecteur mixte.

Il existe des lecteurs de cartes dit mixtes qui permettent de lire des cartes portant une piste magnétique ou bien des cartes portant un circuit intégré ou des cartes portant les deux à la fois. Un tel lecteur est décrit par la demande de brevet européen 0134110, mais comporte une station de lecture ou traitement du circuit intégré qui vient en contact avec la carte par un déplacement perpendiculaire au sens de déplacement de la carte. On peut prévoir que ce type de lecteur représente l'inconvénient de ne pas pouvoir auto-nettoyer les contacts de la tête de lecture du circuit intégré ou de la carte lorsque ces derniers viennent en contact avec la tête de lecture de façon à établir la liaison avec l'unité de traitement des informations du circuit intégré.

De même, il est connu par le brevet US 3 850 299 un procédé de confiscation d'une carte dans lequel la carte est extraite d'une station de lecture pour, après inversion du sens de déplacement de la carte, provoquer le basculement de celle-ci dans un bac de confiscation. Toutefois, un tel dispositif appliqué à un lecteur mixte aurait pour résultat d'accroître la dimension du lecteur mixte et de compliquer sa mécanique.

Il est également connu par le document de la demande de brevet français 2 445 560, un dispositif de connection à contacts auto-nettoyants.

Un premier but de l'invention est de proposer un procédé de confiscation d'une carte mixte par un lecteur le plus compact possible.

Le premier but est atteint par le fait que le procédé de confiscation d'une carte mixte par un lecteur équipé successivement et dans l'ordre d'un sans d'entrée d'un chemin de guidage pourvu de moyen d'entraînement des cartes vers une station de lecture (4) d'une piste magnétique, puis une station (5) de traitement de cartes à circuit intégré disposées toutes deux dans le chemin de guidage, comportant les étapes suivantes:

introduction de la carte dans la station de traitement (5) dans le sens de déplacement allant du sas d'entrée vers la station de traitement:

prise en compte en traitement des informations du circuit intégré;

entraînement de la carte dans le sens de déplacement allant de la station de traitement vers le sas d'entrée jusqu'à extraction totale de la carte de la station de traitement;

caractérisé en ce qu'il comporte en outre les étapes suivantes;

basculement de la station de traitement pour libérer le passage à un bac de confiscation situé sous la station de traitement;

entraînement de la carte dans le sens de déplacement allant du sas d'entrée vers le bac de confiscation.

Le deuxième but de l'invention est de proposer un lecteur mixte qui permet de confisquer des cartes tout en ayant un lecteur le plus compact possible.

Le deuxième but est atteint par le fait que le lecteur mixte comporte un sas d'entrée, un chemin de guidage fixe, pourvu de moyen d'entraînement des cartes, une station de lecture de la piste magnétique de la carte constituée d'un côté du chemin de guidage par une tête de lecture et de l'autre côté par un galet moteur, dans le prolongement du chemin de guidage une station de traitement de cartes à circuit intégré montée de façon à obturer le chemin de guidage, caractérisé en ce que la station de traitement est montée également de façon à s'escamoter en cas de confiscation pour libérer le passage d'introduction dans un bac de confiscation situé sous la station de traitement.

Selon une autre caractéristique, l'escamotage de la station de traitement est commandé par un électro-aimant.

L'invention a également pour troisième but de proposer un lecteur mixte qui permette d'avoir des contracts autonettoyants et de confisquer des cartes tout en ayant un lecteur le plus compact possible.

Selon une autre caractéristique, la station de traitement (5) comporte des contacts auto-nettoyants.

Selon cette même caractéristique les contacts autonettoyants sont constitués par un bloc de contact effectuant un déplacement parallèle au sens de déplacement de la carte, guidée par une découpe, déplacement accompagné d'un basculement autour d'un axe, dont le résultat provoque un déplacement relatif des contacts par rapport à la carte.

La présente invention apparaîtrait plus clairement à la lecture de la description ci-après, faite en référence aux dessins annexés dans lesquels:

La figure 1 représente une vue latérale schématique du lecteur;

La figure 2 représente une vue de devant du chemin de guidage et du dispositif d'entraînement du lecteur;

La figure 3.A. représente un vue de devant du sas d'entrée;

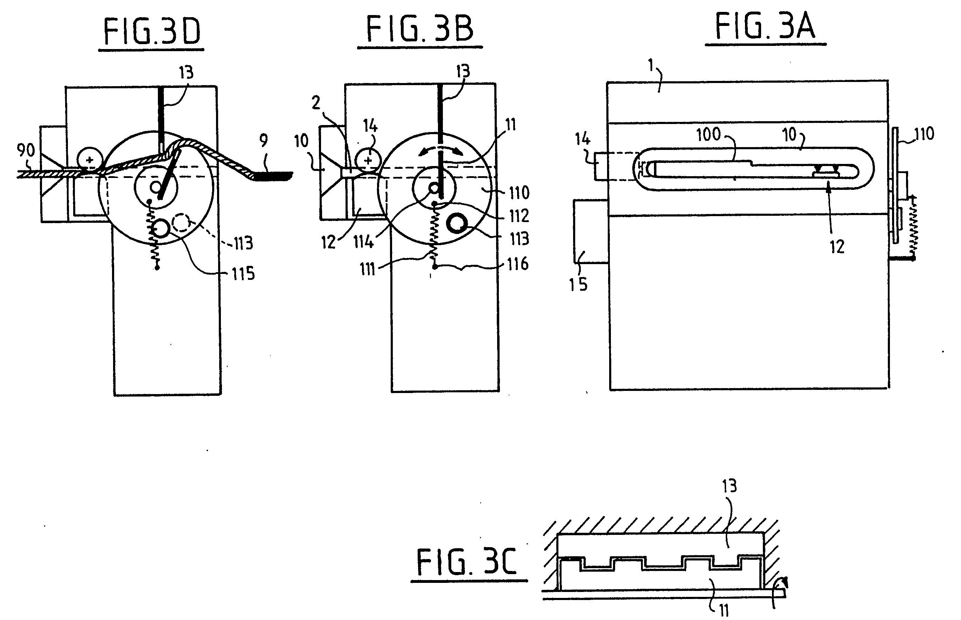

La figure 3.B. représente une vue latérale du dispositif d'obturation du sas d'entrée;

La figure 3.C. représente un vue de derrière du volet d'obturation du sas;

La figure 3.D. représente une vue latérale du sas d'obturation lors d'une tentative de fraude;

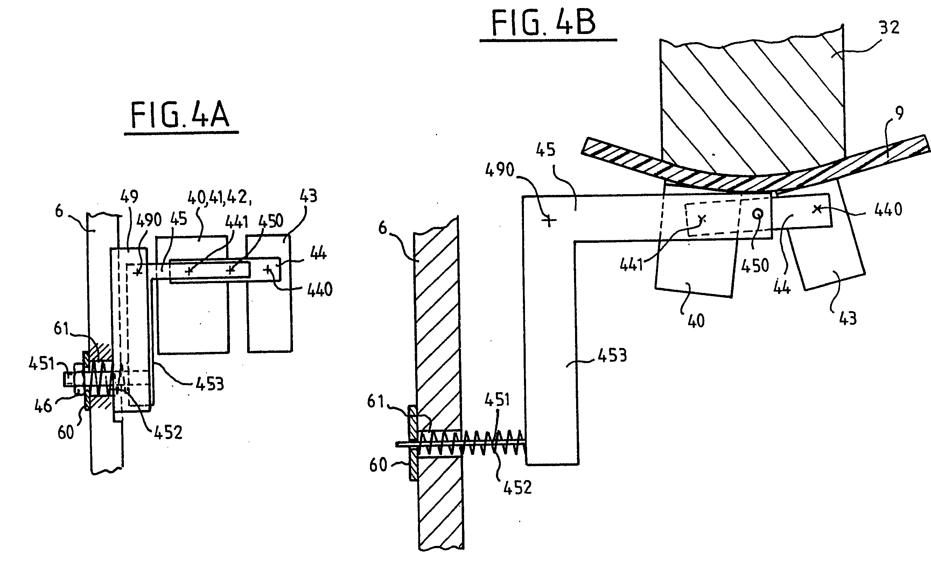

La figure 4.A. représente une vue de côté des têtes de lecture du dispositif;

La figure 4.B. représente une vue de côté suivant une direction parallèle au sens de déplacement des cartes, des têtes de lecture en action sur une carte déformée;

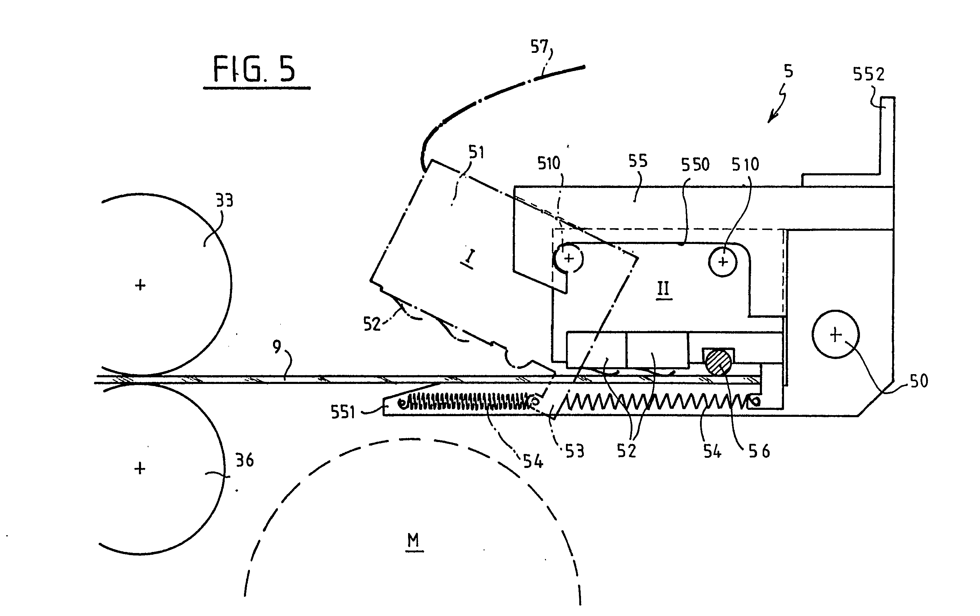

La figure 5 représente une vue latérale de la station de lecture du composant intégré;

La figure 6 représente une vue latérale du lecteur lors d'une confiscation de carte.

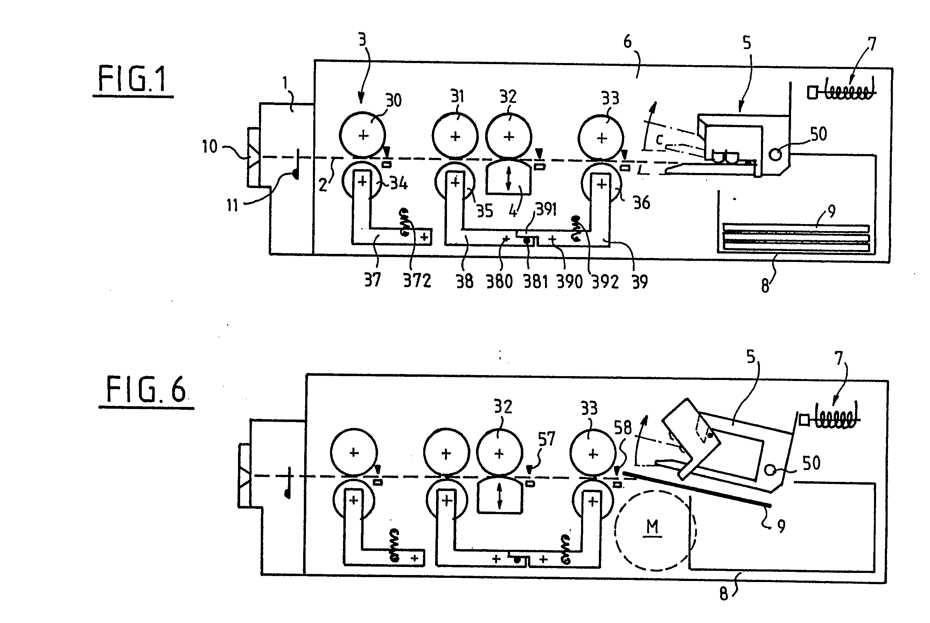

Comme on peut le voir à la figure 1 le lecteur est constitué successivement par un sas d'entrée (1), un chemin de guidage (2) dans lequel circule une carte (9) non représentée entraînée par des moyens d'entraînement (3) en direction d'une tête de lecture (4) de la piste magnétique de la carte d'identification (9) et par la suite en direction d'une station (5) de lecture écriture du circuit intégré de la carte d'identification (9). Ce lecteur permet donc d'acceuillir des cartes à piste magnétique, des cartes à circuit intégré, ou des cartes mixtes comportant à la fois la piste magnétique et le circuit intégré. Cette station de traitement (5) est montée pivotante autour d'un axe (50) de façon à pourvoir être actionnée par un électro-aimant (7) qui permet son basculement entre deux positions L, C l'une, L, correspondant à la lecture des informations contenues par le circuit intégré, l'autre C correspondant à la position de confiscation d'une carte. Le dispositif d'entraînement (3) est constitué par une série de quatre galets monteurs (30, 31, 32, 33), contre lesquels la carte est appliquée par des contregalets (34, 35, 36), et les têtes de lecture (4). Les contregalets (34, 35, 36) sont montés sur des bras en L respectivement (37, 38, 39). Ces bras en L sont eux-mêmes montés pivotants sur des axes solidaires d'une platine (6) et sont sollicités par des moyens élastiques (372, 392) de façon à maintenir les contregalets en appui sur la carte au moment de son passage avec une pression déterminée. Les contregalets (35, 36) entourant les têtes de lecture (4) sont montés sur des bras (38; 39) liés mécaniquement par un dispositif connu, constitué par une goupille (381) et un doigt (391) de façon à ce que le passage de la carte entre les galets (35 et 31) provoque l'écartement des galets (36 et 33), ceci pour éviter le freinage de la carte à la sortie de la tête de lecture, lorsque celle-ci se présente entre les deux galets (33 et 36). Les cartes confisquées sont introduites dans un bac (36). Les cartes confisquées sont introduites dans un bac (8) de confiscation. A l'entrée, les cartes sont glissées dans l'ouverture (10) en forme de cône et poussées en direction du volet d'obturation (11) par le client.

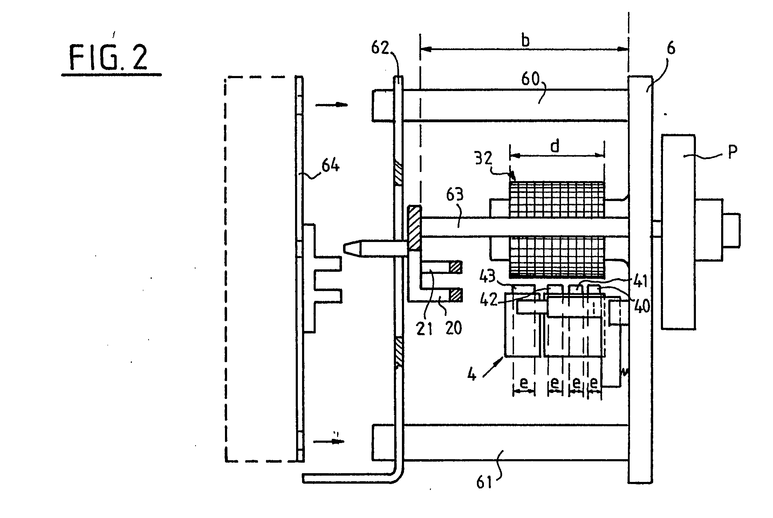

La figure 2 représente une vue dans le sens de déplacement des cartes du lecteur sans son sas d'entrée. Le lecteur est constitué d'une platine (6) qui supporte les différents éléments. Cette platine supporte des entretoises (60, 61) au bout desquelles une plaque (62) est montée, supportant le circuit imprimé (64). La platine (6) supporte des entretoises (63) qui maintiennent à une distance b le chemin de guidage (2). Le chemin de guidage est constitué d'une part, par une fourche ayant des dents (21, 20) et dont l'entredent se trouve dans le prolongement du plan séparant le galet moteur (32) de la tête magnétique (4), d'autre part par les galets (30 à 33) et les contregalets (34 à 36). Comme on peut le voir sur cette figure le galet moteur (32) a une largeur minimum (d) qui recouvre au moins en totalité dans leurs largeurs (e), tous les éléments (4) des têtes magnétiques de lecture venant en contact avec les cartes magnétiques afin d'éviter la création d'un couple parasite et de direction oblique par rapport à la trajectoire rectiligne recherchée et parallèle au chemin prédéfini du lecteur. Cet ensemble (4) comporte trois têtes de lecture (40, 41, 42) disposées dans un seul bloc et une quatrième tête de lecture (43) montée toute seule. Cet ensemble de têtes (4) est monté de façon représentée à la figure (4A) au moyen de deux palonniers (44) disposés de part et d'autre des têtes (40 à 43) et au moyen d'une fourche de support (45). La tête (43) est articulée sur les deux palonniers (44) au moyen d'un axe (440) situé à une première extrêmité des palonniers et parallèle à la direction du chemin de guidage, tandis que les têtes (40 à 42) réunies en un seul sous-ensemble sont articulées autour d'un axe (441) supporté à la deuxième extrêmité des deux palonniers (44) et parallèle à l'axe (440). Les extrêmités de la fourche de support (45) supportent un axe (450) qui passe par le milieu des deux palonniers de façon à ce que ceux-ci soient articulés sur la fourche (45). Cette fourche (45) est articulée autour d'un axe (490) qui est solidaire de deux flasques (49), disposées de part et d'autre des têtes, et solidaires de la platine (6). La fourche (45) présente un profil en forme de L qui comporte, à l'extrêmité de la branche (453) ne supportant pas l'axe de pivotement (450), un goujon (451) qui traverse la platine (6) dans un trou (61) ménagé dans celle-ci. Une rondelle (60) solidaire de la platine (6) permet à un ressort (452) passant dans le trou (61), de s'appuyer sur cette rondelle et sur l'extrêmité du bras (453) de la fourche (45). Un écrou (46) permet par vissage sur le goujon (451) de régler le jeu entre les têtes et le galet moteur qui leur est opposé. Les galets sont montés au moyen de roulements à billes sur les axes d'entraînement, eux-mêmes entraînés par un moteur M (fig. 5) par l'intermédiaire d'un système à courroie (non représentée) et poulie P (fig. 2). Les différents organes moteur, têtes de lecture magnétique, tête de lecture à circuit intégré, dispositif de verrouillage sont commandés par une carte électronique qui est montée solidaire des entretoises (60 et 61).

La figure 4B permet de mettre en évidence l'intérêt d'un tel montage des têtes de lecture magnétique. Comme on peut le voir sur cette figure, une carte (9) déformée, est quand même lue correctement par les têtes de lecture qui grâce au sytème d'articulation de la fourche (45) et du palonnier viennent s'appliquer sur les pistes magnétiques correspondantes. Ce système permet lorsque la déformation de la carte est dûe à l'usure du galet d'entraînement (32) d'avoir une lecture correcte.

Le sas d'entrée (1) qui est monté de façon amovible par rapport à la platine (6) est constitué comme on peut le voir sur la figure 3A à 3C d'une ouverture tronconique (10) qui se termine dans sa partie la plus étroite donnant accès au chemin de guidage (2) par une fente présentant un décrochage asymétrique (100) de façon à constituer un moyen de détrompage pour les cartes magnétiques pourvues d'embossage. En retrait de l'ouverture de détrompage se trouve une tête magnétique ou autre système de détection (12) qui permet d'assurer la détection d'une piste magnétique. A la hauteur de cette tête magnétique et disposé latéralement par rapport à l'ouverture d'introduction des cartes se trouve un interrupteur (14) qui permet d'assurer une détection de largeur des cartes introduites. A l'arrière de ces deux éléments de détection, par rapport au sens d'introduction de la carte, se trouve un volet (11) monté sur un axe de rotation (114), à une extrêmité duquel se trouve un disque (110) solidaire de cet axe (114). Un ressort (111) dont une extrémité est rendue solidaire du boitier du sas d'entrée (1) et dont l'autre extrêmité est solidaire d'une goupille (112) elle-même solidaire du disque (110), permet de ramener le volet d'obturation (11) dans sa position de fermeture du chemin de guidage (2). Un deuxième volet fixe (13) coopère avec le premier volet mobile (11). Comme on peut le voir sur la figure 3C les deux volets sont pourvus de dentures complémentaires de façon à constituer des chicanes antifraude. Le disque (110) est pourvu d'une ouverture qui permet l'introduction d'un doigt de verrouillage (113), lui-même solidaire du noyau plongeur d'un electro-aimant non représenté sur la figure. Un dispositif (15) constitué par tout moyen connu de l'homme de métier permet de détecter le verrouillage du disque. Ce dispositif (15) peut-être, par exemple, un interrupteur qui détectera la position du noyau plongeur de l'électro-aimant. De façon connue, lorsqu'une piste magnétique est détectée par la tête (12) et une largeur de carte correcte est détectée par le dispositif (14), le circuit de commande provoque le déverrouillage du disque (110) par retrait du doigt (113) et la carte poussée par le client peut faire basculer le volet d'obturation (11). Le sas d'entrée (1) étant de dimension inférieure à la longueur de la carte celle-ci traversera le sas d'entrée et sera prise entre le galet d'entraînement (30) et son contregalet (34) et entraînée par le dispositif monté sur la platine (6).

La figure 3D permet de mettre en évidence l'intérêt du dispositif d'obturation du sas lors d'une tentative de fraude. Sur cette figure on a représenté une nappe de fils souples (90) reliés à une carte bancaire (9) qui comporte au moins un système à microprocesseur ou circuit intégré. Cette nappe de fils souples (90) est destinée à établir une liaison entre le bloc de contact (5) permettant d'accéder au système informatique de la banque et un dispositif de fraude conçu par le fraudeur. Dans ce cas le système à chicanes des volets d'obturation empêche le retour du disque (110) à sa position de fermeture et par conséquent l'introduction du doigt de verrouillage (113) dans l'orifice (115). Dans ce cas le verrouillage du sas d'entrée n'étant pas détecté le dispositif ne permettra aucune transaction et par conséquent le fraudeur ne pourra pas avoir accès aux informations du système bancaire.

La figure 5 représente une carte (9) qui a été introduite par le galet d'entraînement (33) et son contre galet (36) dans la fente ménagée dans le dispositif de lecture (5) de cartes à circuit intégré. Ce dispositif comporte un bloc mobile (51) supportant à sa partie inférieure une série de blocs de contacts (52) et un jonc (56) en caoutchouc placé dans une gorge de façon à venir appuyer sur la carte (9) lorsque le bloc de lecture (51) est dans la position de travail, représenté par la référence II. Ce bloc de lecture (51) est monté mobile dans une pièce support (55) articulée autour d'un axe de pivotement (50), lui-même solidaire de la platine (6). Cette pièce de support (55) présente une lèvre inférieure (551) à l'intérieur de laquelle est placé un ressort de rappel (54) dont une extrémité est fixée à l'extrêmité libre ou avant de la lèvre inférieure (551) et l'autre extrémité est fixée à l'extrêmité d'un ergot (53) placé à la partie inférieure arrière du bloc de lecture (51). Un doigt ou axe (510) solidaire du bloc de lecture (51) et monté à la partie supérieure arrière de celui-ci, se déplace dans une découpe (550) parallèle à la lèvre (551) et à la direction de déplacement des cartes et aménagée dans la pièce de support (55) de façon à guider le déplacement du bloc (51) entre sa position de repos (I) et sa position de travail (II). Lors du déplacement du bloc (51) entre les positions I et II, il se crée un déplacement relatif des contacts (52) par rapport à la carte (9) qui opère un autonettoyage des surfaces de contact en présence. Un ruban souple (57) permet de réaliser la connexion électrique entre les contacts (52) et le dispositif de traitement des informations contenues par le circuit intégré de la carte. Une pièce métallique (552) en forme de palette solidaire du support (55) permet au noyau d'un électro-aimant (7) d'attirer l'ensemble de lecture dans une position haute basculée autour de l'axe (50), position qui libère l'accès à un boitier de confiscation (8) des cartes (9), (comme représenté figure 6). Des détecteurs photo-électriques (57, 58) placés sur le trajet de la carte, permettent de connaître sa position et au circuit logique de commande de provoquer les différentes actions nécessaires au fonctionnement du lecteur.

Le fonctionnement de la station de lecture pour circuit intégré et du dispositif de confiscation de cartes va maintenant être expliqué à l'aide des figures 5 et 6. Lors d'un fonctionnement normal avec une carte mixte, la carte franchit le sas d'entrée (1) passe à la station de lecture de la piste magnétique (4) et est entraînée par les galets vers la station (5) de lecture du circuit intégré. La carte entraînée par les galets (32 et 33) vient en butée contre l'ergot (53) du bloc de lecture (51) qui est dans la position I de la figure 5. La carte (9) poussée par le galet d'entraînement (33) provoque le déplacement du bloc de lecture (51) pour l'amener contre l'action du ressort de rappel (54) dans la position de travail 2. Pendant ce déplacement les contacts (52) viennent se mettre en place en face des plots de contacts du circuit intégré monté sur la carte (9) Le moteur M d'entraînement des galets (30 à 33) est arrêté par l'action du bloc de lecture (51) qui en fin de course commande lorsqu'il arrive dans sa position II un interrupteur (non représenté). Lorsque la transaction s'est effectuée normalement le moteur est mis en route en sens inverse et la carte (9) est entraînée en sens inverse par les galets pour être restituée à son propriétaire. Dans le cas où à la fin de la transaction l'appareil aboutit à la conclusion que la carte doit être confisquée il procède de la façon suivante.

Lorsque la transaction a été effectuée par l'intermédiaire de la liaison électrique (56) entre le système bancaire et le circuit intégré, l'ordre de mise en route des galets d'entrainement est envoyée au lecteur et le sens de rotation du galet (33) est inversé pour extraire la carte (9) du logement défini entre la lèvre (551) et la face inférieure du bloc (51) portant les contacts (52). Si la carte doit être confisquée dès que le détecteur photoélectrique (58) placé entre le galet (36) et le bloc (5), détecte l'absence de la carte, c'est-à-dire lorsque celle-ci se trouve au niveau de la station de lecture magnétique, la logique du circuit électronique commande l'alimentation de l'électroaimant (7) qui provoque le basculement du bloc (5) dans la position de confiscation représentée à la figure 6. Le bloc (5) ayant été basculé le sens de rotation des galets est à nouveau inversé et la carte (9) est entraînée par les galets (32 et 33), en direction du bac de confiscation (8) de façon à amener la carte (9) dans le bac de confiscation (8).

D'autres modifications à la portée de l'homme de métier font également partie de l'esprit de l'invention.

## Revendications

1. Procédé de confiscation d'une carte mixte par un lecteur équipé succèssivement et dans l'ordre d'un sas d'entrée (1), d'un chemin de guidage (2) pourvu de moyen d'entraînement (30 à 36) des cartes vers une station de lecture (4) d'une piste magnétique puis une station (5) de traitement de cartes à circuit intégré disposées toutes deux dans le chemin de guidage, comportant les étapes suivantes:

introduction de la carte (9) dans la station de traitement (5) dans le sens de déplacement allant du sas d'entrée (1) vers la station de traitement (5);

prise en compte et traitement des informations du circuit intégré;

entraînement de la carte dans le sens de déplacement allant de la station de traitement (5) vers le sas d'entrée (1) jusqu'à extraction totale de la carte de la station de traitement (5);

caractérisé en ce qu'il comporte en outre les étapes suivantes:

basculement de la station de traitement (5) pour libérer le passage à un bac de confiscation (8) située sous la station de traitement;

entraînement de la carte (9) dans le sens de déplacement allant du sas d'entrée (1) vers le bac de confiscation (8).

2. Lecteur mixte comportant un sas d'entrée (1), un chemin de guidage fixe (2), pourvu de moyen d'entraînement (30 à 36) des cartes (9), une station de lecture (4) de la piste magnétique de la carte (9) constituée d'un côté du chemin de guidage (2) par un tête de lecture (4) et de l'autre côté par un galet moteur (32) dans le prolongement du chemin de guidage (2) une station de traitement (5) de cartes à circuit intégré montée de façon à obturer le chemin de guidage, caractérisé en ce que la station de traitement est montée également de façon à s'escamoter en cas de confiscation pour libérer le passage d'introduction dans un bac de confiscation (8) situé selon la station de traitement.

3. Lecteur selon la revendication 2, caractérisé en ce que l'escamotage de la station de traitement (5) est commandé par un électro-aimant (7).

4. Lecteur selon la revendication 2 ou 3, caractérisé en ce que la station de traitement comporte des contacts (52) auto-nettoyants.

5. Lecteur selon la revendication 4, caractérisé en ce que les contacts auto-nettoyants sont constitués par un bloc (51) effectuant un déplacement parallèle au sens de déplacement de la carte (9) guidé par une découpe (550), et accompagné d'un basculement autour d'un axe (510), déplacement dont le résultat provoque un déplacement relatif des contacts (52) par rapport à la carte (9).

## Patentansprüche

1. Verfahren zum Einziehen einer kombinierten Karte durch einen Leser, der hintereinander der Reihenfolge nach mit einem Eintritt (1), einer Führungsbahn (2) mit Mitnahmeeinrichtungen (30—36) der Karten zu einer Lesestation (4) einer magnetischen Spur und dann zu einer Behandlungsstation (5) der Karten mit integrierter Schaltung ausgestattet ist, die beide in der Führungsbahn vorgesehen sind, wobei die folgenden Stufen vorhanden sind:

die Karte (9) wird in die Behandlungsstation (5) in Verschieberichtung vom Eintritt (1) zur Behandlungsstation (5) eingebracht;

den Informationen der integrierten Schaltung wird Rechnung getragen und sie werden behandelt;

die Karte wird in Verschieberichtung von der Behandlungsstation (5) zum Eintritt (1) bis zur vollständigen Entfernung der Karte aus der Behandlungsstation (5) verschoben,

dadurch gekennzeichnet, daß es noch die folgenden Stufen umfaßt:

die Behandlungsstation (5) wird zum Freisetzen des Durchtrittes zu einem Einzugsbehälter (8) unterhalb der Behandlungsstation gekippt und

die Karte (9) wird in Verschieberichtung vom Eintritt (1) zum Einzugsbehälter (8) verschoben.

2. Kombinierter Lesser mit einem Eintritt (1), einer festen Führungsbahn (2) mit Mitnahmeeinrichtungen (30—36) für Karten (9), einer Lesestation (4) für die magnetische Spur der Karte (9), die auf einer Seite der Führungsbahn (2) durch einen Lesekopf (4) und an der anderen Seite durch eine Motorrolle (32) gebildet ist und in der Verlängerung der Führungsbahn (2) eine Behandlungsstation (5) für die Karten mit integriertem Schaltkreis derart angeordnet ist, daß die Führungsbahn gesperrt wird, dadurch gekennzeichnet, daß die Behandlungsstation auch so angeordnet ist, daß sie im Falle des Einzuges rückgezogen wird, um den Eintritt in den Einzugsbehälter (8) unterhalb der Behandlungsstation freizugeben.

3. Leser nach Anspruch 1, dadurch gekennzeichnet, daß das Einziehen der Behandlungsstation (5) durch einen Elektromagnet (7) gesteuert wird.

4. Leser nach Anspruch 2 oder 3, dadurch gekennzeichnet, daß die Behandlungsstation selbstreinigende Kontakte (52) aufweist.

5. Leser nach Anspruch 4, dadurch gekennzeichnet, daß die selbstreinigenden Kontakte durch einen Block (51) gebildet werden, der eine Parallelverschiebung in Richtung der Verschiebung der Karte (9) bewirkt, der durch eine Ausschneidung (550) geführt und von einem Kippen um eine Verschiebeachse (51) begleitet ist, was eine relative Verschiebung der Kontakte (52) gegenüber der Karte (9) hervorruft.

**Claims**

1. A method of confiscation of a composite card by reading apparatus provided, successively and in sequence, with an entry chamber (1), a guide path (2) provided with means (30 to 36) for conveying the cards towards a station (4) for reading a magnetic strip, then to a station (5) for processing integrated circuit cards, both arranged in the guide path, comprising the following steps:

introducing the card (9) into the processing station (5) in the direction of displacement going from the entry chamber (1) towards the processing station (5);

considering and processing the data of the integrated circuit;

conveying the card in the direction of displacement going from the processing station (5) towards the entry chamber (1) until complete extracton of the card from the processing station (5);

characterized in that it also comprises the following steps:

tipping the processing station (5) to open the way to a confiscation receptacle (8) situated beneath the processing station;

conveying the card (9) in the direction of displacement going from the entry chamber (1) towards the confiscation receptacle (8).

2. Combined reading apparatus comprising an entry chamber (1), a fixed guide path (2) provided with means (30 to 36) for conveying cards (9), a station (4) for reading the magnetic strip of the card (9) formed at one side of the guide path (2) by a read head (4) and at the other side by a drive roller (32) in the extension of the guide path (2), a station (5) for processing integrated circuit cards mounted in such manner as to obstruct the guide path, characterized in that the processing station is equally mounted in such manner as to be retractable in case of a confiscation to free the passage into a confiscation receptacle (8) situated beneath the processing station.

3. Reading apparatus according to Claim 2, characterized in that the retraction of the processing station (5) is operated by means of an electromagnet (7).

4. Reading apparatus according to Claim 2 or 3, characterized in that the processing station comprises self-cleaning contacts (52).

5. Reading apparatus according to Claim 4, characterized in that the self-cleaning contacts are formed by a block (51) effecting a displacement parallel to the direction of displacement of the card (9) guided by a cutaway (550) and accompanied by a tipping movement around spindle (510), the result of which displacement causes a relative displacement of the contacts (52) with respect to the card (9).

FIG.1

FIG.6

FIG.2

**FIG. 3A**

**FIG. 3B**

**FIG. 3C**

**FIG. 3D**

3

FIG.4A

FIG.4B

EP 0 218 504 B1

# FIG. 5

EP 0 218 504 B1